# EUROPEAN PATENT SPECIFICATION

(11) **EP 4 114 558 B1**
(45) Date of publication and mention of the grant of the patent: **26.03.2025**
(21) Application number: 21825695.6
(22) Date of filing: 02.11.2021
(51) Int. Cl.: B01F 25/00, B65D 83/06, B65D 90/62, B01F 35/88, G01F 13/00, B01F 35/80, B65B 1/30, B65D 88/54

(54) **GRANULAR PRODUCT DISCHARGE FLAP SYSTEM FOR DOSING SYSTEMS**
GRANULARES PRODUKTAUSTRAGSKLAPPENSYSTEM FÜR DOSIERSYSTEME
SYSTÈME DE CLAPET DE DÉCHARGE DE PRODUIT GRANULAIRE POUR SYSTÈMES DE DOSAGE

(30) Priority: 14.10.2021 TR 202116062
(43) Date of publication of application: 11.01.2023
(73) Proprietor: Gencler Elektronik Sanayi Ve Ticaret Limited Sirketi, 34000 Istanbul (TR)
(72) Inventor: EKSI , Hakan, 34000 stanbul (TR)
(74) Representative: Kaya, Erdem
(86) International application number: PCT/TR2021/051112
(87) International publication number: WO 2021/257043

(56) References cited:
- EP-A1- 1 348 939
- EP-B1- 2 980 334
- US-A- 1 618 190
- US-A1- 2003 185 095
- US-A1- 2015 217 878
- US-A1- 2016 234 998

## Description

### TECHNICAL FIELD

The invention relates to a granular product discharge flap system which is employed in dosing systems, enables discharging very fine doses of the relevant materials without any losses of time and labor, and reduces assembly and disassembly times in cases of repair and maintenance requiring intervention in the system.

### BACKGROUND ART

Dosing systems are essentially structures enabling the entry and exit of granular materials and their derivatives by rationing or weighing them by opening and closing of the system via flaps. These systems are comprised of raw material loaders which are the first entry points for the materials, storage chambers, flap systems, weighing chambers for weighing the material, and mixing chambers.

Flap systems are structures that are controlled by automation for stopping the flowing material and discharging it by opening the flap when needed. Properties of the flap system are its mechanical structure, its opening-closing speed, the adjustability of the active flow area of the material, and ease of use of the system.

In terms of repair and maintenance of the system, easy access to and unlabored assembly and disassembly of the flap systems are of utmost importance. Patent document no. US2003185095 in the prior art mentions a dosing system. The disassembly of the flap system of the said invention and the subsequent maintenance procedure take a quite long time since the flaps are connected to the storage chambers, making intervention difficult.

The flap system opens and closes with mechanical movements. The operating forces of these mechanical movements in the linear field and the frequency of system failure or mechanical problems directly affect the efficiency of dosing systems. Additionally, as seen in patent no. US2003185095, the flaps are connected to the frame of the system from a single point. This increases the load on this system; mechanical and failure predisposition of the system do not make it possible to operate without problems for a long time. Moreover, the single-point connection of the flaps increases its circular path, negatively affecting the opening and closing speed of the flaps. The frequent occurrence of these problems and challenging maintenance of the systems considerably decrease efficiency. Considering the flap systems in the prior art, the adjustability of the active flow area of the material in the system is quite important. In patent no. US2003185095, metal wings that narrow or expand the area should be disassembled and adjusted in order to adjust the active area. In the current techniques, the need to disassemble the system to adjust the active flow area of the material leads to too much time and extra labor to be dedicated to this procedure.

In other patents no. US6969044B2 and US3998426A in the prior art, the flap systems function only as opening and closing elements; they do not contain a structure that can narrow or expand the flow area when needed. This makes the user unable to adjust the relevant area.

As seen in patents no. US2003185095, US6969044B2, and US3998426A, extracting material from the system in case of any repair, maintenance, or part change procedure either takes a long time or is not possible at all in the existing flap systems. Different methods are applied for the extraction procedure; this includes vacuuming from the weighing scale, manually removing from the material storage chamber, or disassembling the flap system to remove the material therein.

The European application with EP1348939A1 number relates to a gravimetric dosing apparatus designed to accurately dose various loose granular materials to form precise blends. The apparatus includes multiple loading hoppers, each equipped with an opening-closing device for controlled material discharge. These hoppers feed into a weighing hopper, which measures the material before transferring it to a mixing assembly. The weighing process is enhanced by transducers that generate signals proportional to the material weight, allowing for precise control. A digital control unit manages the sequence of operations, ensuring high precision and speed, even in environments with temperature fluctuations or vibrations. The system is capable of storing multiple recipes and can perform fine dosing adjustments for optimal performance, offering an efficient solution for industrial blending applications.

The European patent with EP2980334B1 publication number relates to a crane silo designed for transporting and processing pourable building materials such as concrete, gravel, and sand. The silo consists of a container with a filling opening at the top and a funnel-shaped emptying opening at the bottom. A closure device is attached to the emptying opening, allowing controlled dispensing of the building materials. This closure device includes a rotary slide valve that pivots transversely to the container's vertical emptying direction, ensuring precise material dosing and preventing leaks. The closure system is compatible with manual, hydraulic, or mechanical operation, providing flexibility for different building materials, including self-compacting concrete (SCC). The invention aims to enhance operational safety, efficiency, and ease of maintenance, while ensuring that no building material is lost during the transfer from the silo to a formwork or conveyor system. Additionally, the silo is designed for easy attachment and detachment of various hose devices for adaptable material discharge.

The US1618190A application relates to an automatic pie-filling machine designed to replace manual labor in the filling of pie shells with consistent and precise quantities of pie filling, such as fruits, squash, or mince. The machine features a rotating table that carries pie plates and moves them beneath a filling mechanism. The filling process is controlled by a series of automatic components, including a hopper, valves, and a bucket that measures and deposits the filling into each pie shell. The mechanism is triggered when a pie plate reaches the predetermined position, ensuring accurate filling. The system includes adjustable controls for different materials and ensures uniform weight and quality. The machine can handle large quantities of filling, reducing the need for manual labor and ensuring consistency across batches. Various components, such as the valves and bucket, are designed for quick, automatic operation and can be manually or mechanically controlled for different filling materials.

In conclusion, the abovementioned problems in the existing flap systems, as well as the inadequacy of the current solutions, entail an improvement in the respective field.

### DESCRIPTION OF THE INVENTION

The present invention relates to a flap system that is employed in dosing systems and enables discharging very fine doses of the relevant materials.

An objective of the invention is to ensure assembling and disassembling the flap system without any losses of time and labor if and when needed.

Another objective of the invention is to ensure finely adjusting the area where the concerned product actively flows, without any losses of time and labor.

A further objective of the invention is to ensure easy discharge of the raw material contained in the flap system and storage chamber, without any losses of time and labor.

Another objective of the invention is to ensure smooth operation of the system for the longest time by minimizing mechanical issues thanks to the mechanical structure and properties targeting the minimization of errors and malfunctions.

A further objective of the invention is to make the system lighter and easier to carry by opting for conductive plastic material.

Structural and characteristic features of the invention, as well as all of its advantages, will be understood more clearly with the figures given below and the detailed description written by referring to the relevant figures. Therefore, the evaluation should be made by taking into consideration of the said figures and detailed description.

### Drawings

The applications of the present invention that is briefly summarized above and addressed in detail below can be understood by referring to the sample applications depicted in the attached drawings of the invention. However, it must be stated that the attached drawings show only the typical applications of this invention and that since the invention allows other equally effective applications, its scope cannot be assumed to be limited.
- **Figured:**: It is a left perspective view of the present invention.
- **Figure-2:**: It is a right perspective view of the present invention.
- **Figure-3:**: It is a side view of the flaps in the open position.
- **Figure-4:**: It is a side view of the flaps in the closed position.
- **Figure-5:**: It is a cross-sectional view of the flow adjustment plate in the wide position.
- **Figure-6:**: It is a cross-sectional view of the flow adjustment plate in the narrow position.

In order to facilitate understanding, identical reference numbers are used to indicate identical elements in the figures, where possible. The shapes are not drawn to scale and can be simplified for clarity. It is believed that the elements and features of an application can be usefully incorporated into other applications without further explanation.

### Explanation of Details in the Drawings

Explanations of reference numbers shown in the drawings are given below.
- **1.**: Frame
- **2.**: Fast assembly holes
- **3.**: Piston
- **4.**: Pin
- **5.**: Material outlet wall
- **6.**: Air hose
- **7.**: Holding handle
- **8.**: Flow handle
- **9.**: Connecting element
- **10.**: Flap
- **11.**: Discharge hose
- **12.**: Discharge hose cover
- **13.**: Flow adjustment plate
- **14.**: Valve
- **15.**: Main air inlet
- **16.**: Nut
- **17.**: Mechanism fixing plate

### DETAILED EXPLANATION OF THE INVENTION

The preferred alternatives in this detailed description of the embodiment of the granular product discharge flap (10) system for dosing systems of the present invention are only intended for providing a better understanding of the subject matter and should not be construed in any restrictive sense.

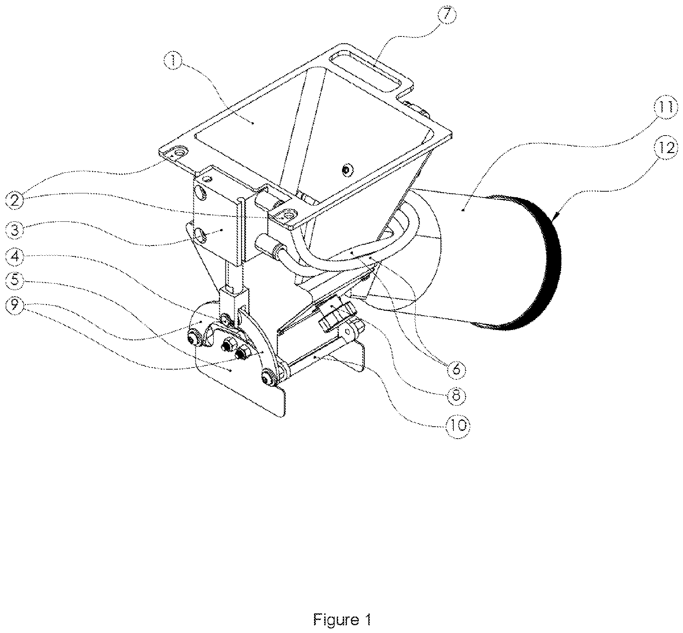

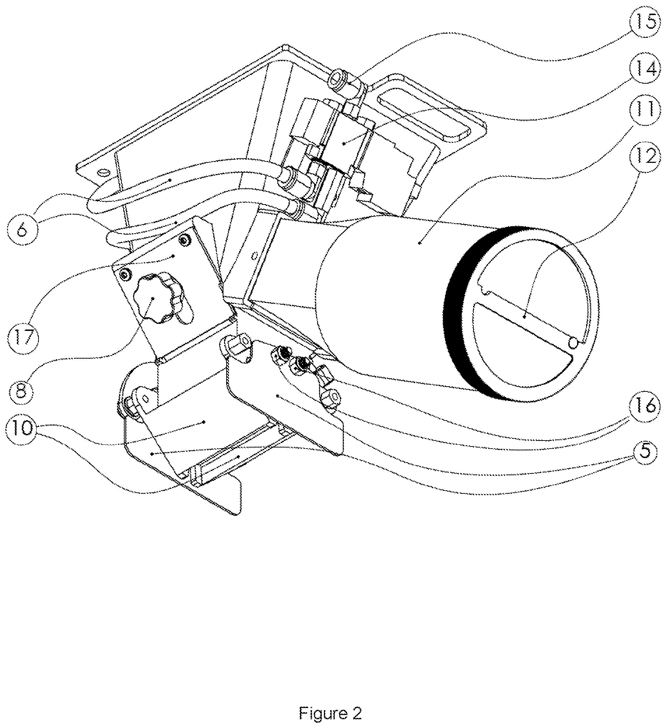

The granular product discharge flap (10) system for dosing systems of the present invention consists of a finished frame (1) enabling product entry and exit and allowing the mechanical parts to be positioned thereon. This frame (1) is the main element of the invention where other elements are connected. This frame (1) is preferably made of conductive plastic. On the frame (1), a holding handle (7) is found, ensuring a safe manual grip of the product during assembly and disassembly. There are fast assembly holes (2) on the frame (1), enabling the assembly of the product by sliding. Under the fast assembly holes (2), a piston (3) is located to provide the motion needed for opening and closing the flap (10) on the frame (1). A connecting element (9) connects the piston (3) and the flaps (10). This connecting element (9) ensures the connection between the piston (3) and the flap (10) with a pin (4). Figure 1 and Figure 2 present perspective views of the present invention.

Underneath the system, a material outlet wall (5) is placed to prevent the material exiting the system from being spilled and scattered around. Nuts (16) are employed to fix the material outlet walls (5) and the flaps (10) onto the frame (1). The invention comprises a valve (14) enabling opening and closing the piston (3), an air hose (6) ensuring the airflow between the valve (14) and the piston (3), and a main air inlet (15) allowing the entry of the air required by the system therein.

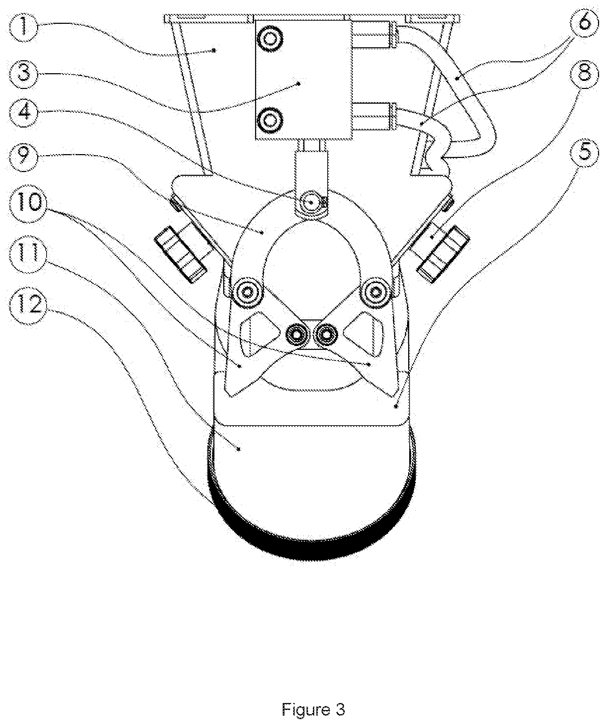

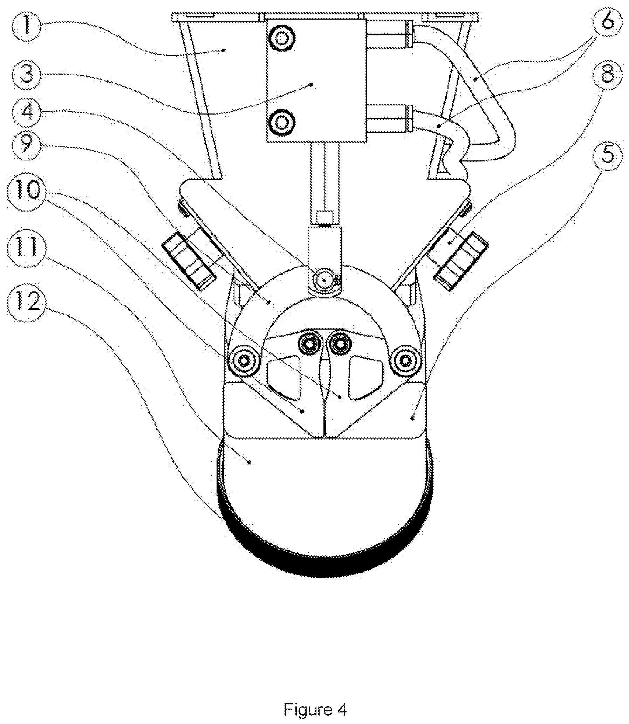

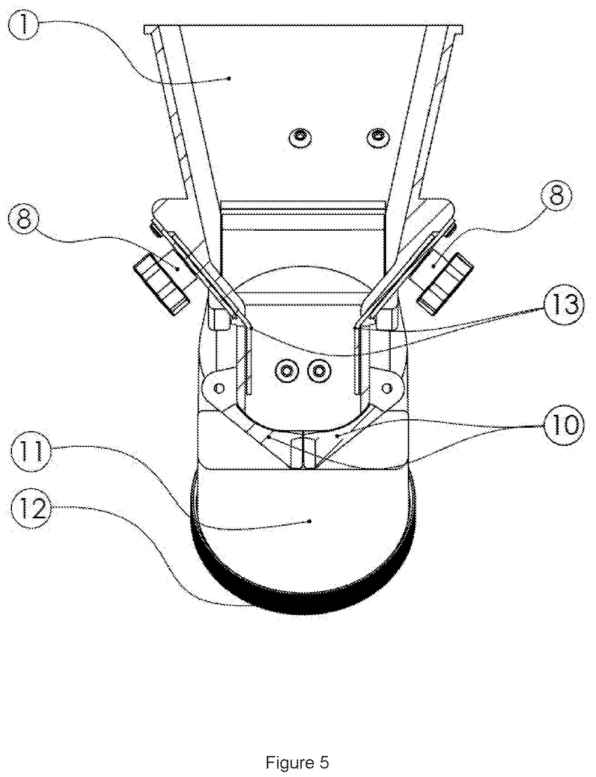

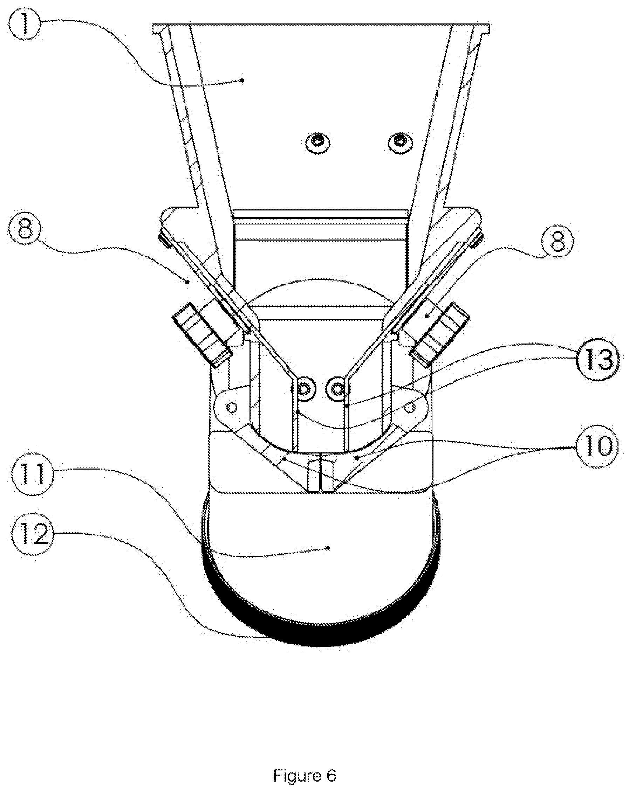

The system of the present invention has flaps (10) starting and stopping the material flow by opening and closing. These flaps (10) are preferably made of stainless steel. The operating speed and modus operandi of the flaps are of utmost significance. The flaps (10) are connected to the frame (1) at two separate force points with the help of the nuts (16). Figure 3 shows a view of the flaps (10) in the open position while Figure 4 is a view of the flaps (10) in the closed position. In this system, adjusting the flow area inside the system during the raw material flow is highly important. In the invention, a flow handle (8) is employed to adjust the relevant flow area. The flow handle (8) is connected to the frame (1) with a mechanism fixing plate (17). These flow handles (8) provide the movement of a flow adjustment plate (13) located in the interior of the flaps (10), thereby enabling narrowing and expanding the flow area. Figure 5 and Figure 6 are cross- sectional views of the flow adjustment plate (13) in the wide and narrow positions. Accordingly, the flow area can be adjusted thanks to the flow handles (8) and the flow adjustment plate (13), without the need for any assembly and disassembly procedures. The flaps (10) and the flow adjustment plates (13) enable the invention to discharge products at fine doses and adjustable flow areas.

Discharge hose (11) is included to fully expel the raw material from the system. This discharge hose (11) is preferably made of conductive plastic. On the discharge hose (11), a discharge hose cover (12) that can be manually opened and closed is located. The discharge hose cover (12) also is preferably made of conductive plastic.

## Claims

1. A granular product discharge flap system which is employed in dosing systems, enables discharging very fine doses of the relevant materials, and reduces assembly and disassembly times in cases of repair and maintenance requiring intervention in the system, comprising:
a finished frame (1) enabling product entry and exit, allowing the mechanical parts to be positioned thereon, and being preferably made of conductive plastic;
flaps (10) starting and stopping the material flow by opening and closing, wherein the flaps are preferably made of stainless steel; a
piston (3) providing the motion needed for opening and closing the flaps (10); a connecting element (9) connecting the piston (3) and the flaps (10); a pin (4) ensuring the connection between the piston (3) and the connecting element (9); a material outlet wall (5) preventing the exiting material from being spilled around; a holding handle (7) allowing to hold the product during assembly and disassembly; a valve (14) enabling opening and closing the piston (3); an air hose (6) ensuring an airflow between the valve (14) and the piston (3);
a main air inlet (15) allowing the entry of the air required by the system therein; nuts (16) fixing the material outlet wall (5) and the flaps (10) onto the frame (1); and **characterized in that** it comprises: fast assembly holes (2) enabling the assembly of the product by sliding; a flow handle (8) enabling to adjust the relevant flow area;
a discharge hose (11) allowing to fully expel the raw material from the system and being preferably made of conductive plastic;
a discharge hose cover (12) ensuring manual opening and closing of the discharge hose (11) and being preferably made of conductive plastic;
a flow adjustment plate (13) being located in the interior of the flaps (10) and enabling narrowing and expanding the flow area with the help of the flow handle (8);
a mechanism fixing plate (17) enabling connecting the flow handle (8) to the frame (1).

## Patentansprüche

1. Ein granulares Produktaustragsklappensystem, das in Dosiersystemen eingesetzt wird, ermöglicht den Austrag sehr feiner Dosen der jeweiligen Materialien und reduziert die Montage- und Demontagezeiten im Falle von Reparatur- und Wartungsarbeiten, die einen Eingriff in das System erfordern, umfassend:
einen fertigen Rahmen (1), der den Ein- und Austritt des Produkts ermöglicht, auf dem die mechanischen Teile positioniert werden können und der vorzugsweise aus leitfähigem Kunststoff besteht;
Klappen (10), die den Materialfluss durch Öffnen und Schließen starten und stoppen, wobei die Klappen vorzugsweise aus nichtrostendem Stahl bestehen;
einen Kolben (3), der die zum Öffnen und Schließen der Klappen (10) erforderliche Bewegung bereitstellt;
ein Verbindungselement (9), das den Kolben (3) und die Klappen (10) verbindet;
einen Stift (4), der die Verbindung zwischen dem Kolben (3) und
dem Verbindungselement (9) sicherstellt;
eine Materialauslasswand (5), die verhindert, dass das austretende Material herumgeschüttet wird;
einen Haltegriff (7), der das Halten des Produkts während der Montage und Demontage ermöglicht;
ein Ventil (14), das das Öffnen und Schließen des Kolbens (3) ermöglicht;
einen Luftschlauch (6), der einen Luftstrom zwischen dem Ventil (14) und dem Kolben (3) sicherstellt;
einen Hauptlufteinlass (15), der den Eintritt der vom System geforderten Luft darin ermöglicht; Muttern (16), die die Materialauslasswand (5) und die Klappen (10) am Rahmen (1) befestigen;
und **dadurch gekennzeichnet, dass** es umfasst:
Schnellmontageöffnungen (2), die die Montage des Produkts durch Gleiten ermöglichen;
einen Durchflussgriff (8), der die Einstellung des jeweiligen Durchflussbereichs ermöglicht;
einen Abgabeschlauch (11), der das vollständige Austreiben des Rohmaterials aus dem System ermöglicht und vorzugsweise aus leitfähigem Kunststoff besteht;
eine Austragsschlauchabdeckung (12), die das manuelle Öffnen und Schließen des Austragsschlauchs (11) sicherstellt und vorzugsweise aus leitfähigem Kunststoff besteht;
eine Durchflusseinstellplatte (13), die im Inneren der Klappen (10) angeordnet ist und das Verengen und Erweitern des Durchflussbereichs mit Hilfe des Durchflussgriffs (8) ermöglicht;
eine Mechanismusbefestigungsplatte (17), die das Verbinden des Durchflussgriffs (8) mit dem Rahmen (1) ermöglicht.

## Revendications

1. Système de clapet de décharge de produit granulaire qui est utilisé dans les systèmes de dosage, permet de décharger des doses très fines des matériaux respectifs et réduit les temps de montage et de démontage en cas de réparation et d'entretien nécessitant une intervention dans le système, comprenant:
un cadre (1) fini autorisant l'entrée et la sortie du produit, permettant aux pièces mécaniques d'être positionnées sur celui-ci, et étant réalisé de préférence en plastique conducteur;
des clapets (10) qui démarrent et arrêtent l'écoulement de matériau en s'ouvrant et en se fermant, dans lequel les clapets sont réalisés de préférence en acier inoxydable;
un piston (3) fournissant le mouvement nécessaire à l'ouverture et à la fermeture des clapets (10);
un élément de connexion (9) connectant le piston (3) et les clapets (10);
une goupille (4) assurant la connexion entre le piston (3) et l'élément de connexion (9);
une paroi de sortie du matériau (5) empêchant le matériau sortant de se répandre dans les environs;
une poignée de maintien (7) permettant de maintenir le produit pendant le montage et le démontage;
une soupape (14) permettant d'ouvrir et de fermer le piston (3);
un tuyau d'air (6) assurant un écoulement d'air entre la soupape (14) et le piston (3);
une entrée d'air principale (15) permettant l'entrée de l'air nécessaire au système;
des écrous (16) fixant la paroi de sortie des matériaux (5) et les clapets (10) sur le cadre (1);
et **caractérisé en ce qu'**il comprend:
trous d'assemblage rapide (2) permettant le montage du produit par glissement;
une poignée d'écoulement (8) permettant de régler la zone d'écoulement respective;
un tuyau de décharge (11) permettant d'expulser complètement la matière première du système et étant réalisé de préférence en plastique conducteur;
un couvercle de tuyau de décharge (12) assurant l'ouverture et la fermeture manuelles du tuyau de décharge (11) et étant réalisé de préférence en plastique conducteur;
une plaque de réglage d'écoulement (13) située à l'intérieur des clapets (10) et permettant de rétrécir et d'élargir la zone d'écoulement à l'aide de la poignée d'écoulement (8);
une plaque de fixation du mécanisme (17) permettant de connecter la poignée d'écoulement (8) au cadre (1).
